# DEMANDE DE BREVET EUROPEEN

(11) **EP 2 184 204 A1**
(43) Date de publication de la demande: **12.05.2010**
(21) Numéro de dépôt: 09174905.1
(22) Date de dépôt: 03.11.2009
(51) Int. Cl.: B60P 7/08, B60R 5/04, B60R 7/02

(54) **Dispositif de compartimentage de coffre à bagages**

(30) Priorité: 06.11.2008 FR 0857545; 06.11.2008 FR 0857546
(71) Demandeur: Peugeot Citroën Automobiles SA, 78140 Vélizy-Villacoublay (FR)
(72) Inventeur: Rousseau, Frédéric, 78730, PONTHEVRARD (FR)

(57) **Abrégé**

Dispositif de compartimentage de coffre à bagages, comportant deux cloisons (12) qui sont conformées pour être posées debout directement en appui sur une aire de chargement (14) d'un véhicule, qui comportent chacune une paroi inférieure dont la surface est munie de moyens leur permettant de tenir en place sur l'aire de chargement et qui sont jumelées entre elles, **caractérisé en ce que** les deux cloisons (12) sont jumelées entre elles par une charnière (22) permettant le pivotement mutuel des deux cloisons selon un axe vertical. Véhicule comportant un tel dispositif pour maintenir une charge dans son coffre à bagages.

## Description

La présente invention est relative à un dispositif de compartimentage de coffre à bagages.

Plus particulièrement, l'invention concerne un tel dispositif comportant deux cloisons qui sont conformées pour être posées debout directement en appui sur une aire de chargement d'un véhicule, notamment d'un véhicule automobile, et qui sont jumelées entre elles.

Un tel dispositif est connu du document US6244802 dans lequel des cloisons sont jumelées, par exemple en L, de façon fixe pour caler une charge posée sur l'aire de chargement. Un tel dispositif est peu évolutif, ce qui le rend par exemple difficile à stocker quand il n'est pas utilisé. De plus, les moyens permettant l'assemblage des deux cloisons sont sensibles à l'usure et au vieillissement car ils sont emboîtés sous contrainte.

La présente invention a notamment pour but de remédier aux inconvénients de l'art antérieur.

A cet effet, l'invention a pour objet un dispositif de compartimentage de coffre à bagages, comportant deux cloisons (12) qui sont conformées pour être posées debout directement en appui sur une aire de chargement (14) d'un véhicule, qui comportent chacune une paroi inférieure dont la surface est munie de moyens leur permettant de tenir en place sur l'aire de chargement et qui sont jumelées entre elles, **caractérisé en ce que** les deux cloisons (12) sont jumelées entre elles par une charnière (22) permettant le pivotement mutuel des deux cloisons selon un axe vertical.

Grâce à ces dispositions, le dispositif peut s'adapter à des charges à caler de différentes formes en faisant pivoter les cloisons.

Dans divers modes de réalisation du dispositif selon l'invention, on peut éventuellement avoir recours en outre à l'une et/ou à l'autre des dispositions suivante :
- la charnière est un film de matière reliant des arêtes verticales adjacentes de chacune des deux cloisons ;
- les deux cloisons et le film de matière sont d'un seul tenant ;
- la charnière comporte au moins un élément mâle et un élément femelle qui sont mutuellement emboîtés et qui peuvent être déboîtés pour séparer les cloisons ;
- l'élément mâle et l'élément femelle sont respectivement sur un côté vertical situé à chacune des extrémités de la cloison ;
- l'élément mâle et l'élément femelle sont emboîtés par coulissement vertical selon l'axe de la charnière, peuvent être verrouillés en translation selon l'axe de la charnière et peuvent être déboîtés par coulissement vertical inverse ;
- l'élément mâle et l'élément femelle sont respectivement au moins une tige verticale reliée à l'une des cloisons et au moins une patte d'accrochage qui est reliée à l'autre des cloisons et qui détermine une cavité interne ayant une forme complémentaire à au moins une partie de la tige de manière que cette dernière soit emboîtée au moins partiellement dans la cavité pour constituer la charnière ;
- la charnière comporte deux pattes qui sont arquées pour former la cavité, qui sont décalées verticalement et qui ont, en projection sur un plan horizontal, d'une part leur concavité se faisant face et d'autre part leurs extrémités libres distantes, et la tige verticale est cylindrique et est reliée à sa cloison par l'intermédiaire d'au moins une branche qui décale la tige par rapport à un corps de la cloison afin qu'un espace soit présent entre la tige et le corps, au dessus de la branche et au dessous de la branche de manière que les pattes d'accrochage puissent pivoter dans l'espace qui leur correspond ;
- les cloisons comportent chacune des moyens leur permettant de tenir en place sur l'aire de chargement en étant immobilisées en rotation ;
- les cloisons comportent chacune, en saillie de leur paroi supérieure, au moins un plot de verrouillage et, en creux dans leur paroi inférieure, au moins un logement de forme correspondante à celle du plot en permettant la superposition de deux dispositifs par emboîtement des plots du dispositif inférieur dans les logements du dispositif supérieur.

Par ailleurs, l'invention a également pour objet un véhicule comportant une aire de chargement dont une paroi sensiblement horizontale servant à supporter une charge est recouverte d'un tapis de type velours pourvu de boucle, caractérisé en ce qu'il est équipé d'un dispositif conforme à l'une quelconque des revendications précédentes dont une surface inférieure est revêtues de crochets permettant un accrochage dans les boucles du tapis quand ladite surface inférieure est posée sur le tapis pour faire tenir en place le dispositif sur l'aire de chargement.

D'autres buts, caractéristiques et avantages de l'invention apparaîtront au cours de la description suivante de plusieurs modes de réalisation, donnés à titre d'exemples non limitatifs, en regard des dessins joints.

Sur les dessins :
- la figure 1 est une vue en perspective d'un dispositif de compartimentage selon l'invention installé dans un coffre à bagages de véhicule automobile ;
- la figure 2 est une vue en perspective de l'une des cloisons du dispositif représenté à la figure 1 ;
- la figure 3 est une vue en perspective de deux cloisons conformes à celles de la figure 2, en cours de coulissement vertical pour leur jumelage ;
- la figure 4 est une vue en perspective de deux cloisons conformes à celle de la figure 2, jumelées et en diverses positions de pivotement mutuel ;
- la figure 5 est une vue de dessus de la charnière de jumelage de deux cloisons du dispositif de compartimentage selon l'invention ;
- la figure 6 est une vue en perspective de deux dispositifs de compartimentage selon l'invention superposés ;
- la figure 7 est une vue en perspective conforme à la figure 3 pour une variante de réalisation d'un dispositif de compartimentage selon l'invention ;
- la figure 8 est une vue de dessus du dispositif de compartimentage de la figure 7 ;
- la figure 9 est une vue en perspective du dispositif des figures 7 et 8 dont les deux cloisons sont représentées alignées ;
- la figure 10 est une vue en perspective du dispositif des figures 7 et 8 dont les deux cloisons sont représentées perpendiculaires ;
- la figure 11 est une vue en perspective d'un dispositif selon l'invention conforme à celui des figures 7 à 10, auquel deux cloisons ont été ajoutées, les quatre cloisons du dispositif étant jumelées et disposées en carré ;
- la figure 12 est une vue de dessus du dispositif de la figure 11 ;
- la figure 13 est une vue en perspective conforme à la figure 1 pour une autre variante de réalisation d'un dispositif de compartimentage selon l'invention ;
- la figure 14 est une vue en perspective de deux cloisons conformes à celles de la figure 13, représentées alignées ;
- la figure 15 est une vue en perspective de deux cloisons conformes à celles des figures 13 et 14, représentées repliées l'une contre l'autre ;
- la figure 16 est une vue en perspective d'une autre variante de cloison de dispositif selon l'invention.

Sur les différentes figures, les mêmes références désignent des éléments identiques ou similaires.

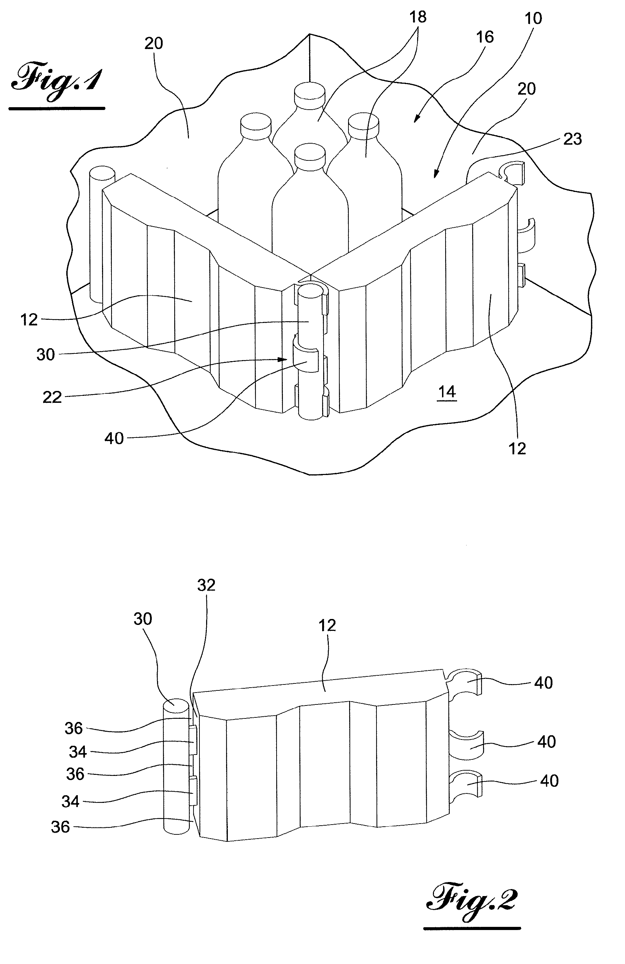

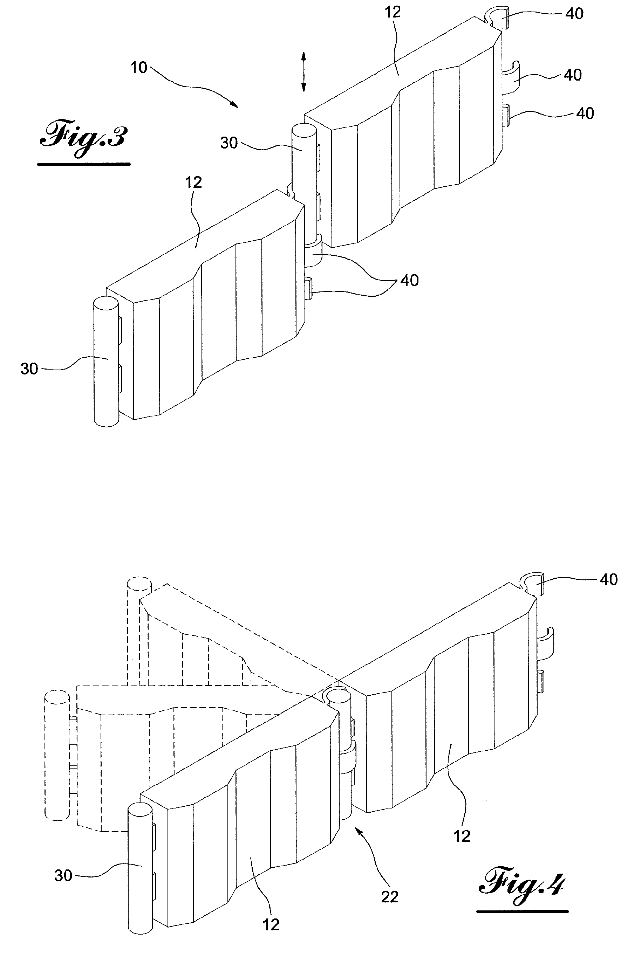

Dans le mode de réalisation représenté aux figures 1 à 6, le dispositif 10 selon l'invention comporte deux cloisons identiques 12 qui peuvent être jumelées de façon démontable et qui peuvent pivoter l'une par rapport à l'autre.

Chacune des cloisons 12 est constituée d'un corps de forme générale sensiblement parallélépipédique dont une paroi inférieure est suffisamment large pour permettre à la cloison d'être posée en tenant debout directement en appui sur une aire de chargement 14 du coffre à bagages 16 d'un véhicule, par exemple un véhicule automobile comme représenté partiellement à la figure 1. La surface inférieure de la paroi inférieure est revêtue d'un revêtement (non représenté sur les figures) comportant des crochets de type auto agrippants dans des boucles d'un velours.

L'aire de chargement 14 est recouverte par exemple d'un tapis de type velours comportant des boucles. Les crochets et les boucles du tapis forment ainsi des moyens d'accrochage auto agrippants permettant la fixation non permanente du dispositif dans le coffre à bagages 16. Le dispositif 10 fixé dans le coffre 16 pour tenir en place dans ce dernier, sert à retenir des objets 18 calés entre des panneaux 20 sensiblement verticaux du coffre et les cloisons 12 du dispositif. Ces objets 18 sont par exemple, comme représenté à la figure 1, des bouteilles qui, une fois calées, ne peuvent plus se déplacer dans le coffre au gré des tournants, des accélération et des freinages.

Sur le corps de chacune des cloisons 12, un système de jumelage de type charnière 22 permet tant la solidarisation des cloisons formant le dispositif 10 que la rotation des cloisons l'une par rapport à l'autre pour que le dispositif puisse avoir une forme en correspondance de celle des objets à caler, ce qui permet d'optimiser le contact entre les objets 18 et une face de retenue de charge 23 présente sur chacune des cloisons.

Dans le mode de réalisation représenté aux figures 1 à 6, la charnière 22 formant le système de jumelage comporte d'une part une tige verticale 30 qui est sensiblement dans le plan médian de la cloison et qui est parallèle à un premier des petits côtés verticaux 32 situés latéralement à l'extrémité du corps de la cloison 12. La tige 30 est cylindrique et est raccordée au premier petit côté 32 de la cloison par deux branches verticales 34 de manière que la tige soit à distance du petit côté 32. Les branches 34 sont distantes l'une de l'autre et sont distantes du haut et du bas du corps, de manière qu'un espace 36 soit présent au dessus et au dessous des branches 34, entre la tige 30 et le corps de la cloison. La charnière 22 comporte d'autre part trois pattes d'accrochage 40 réparties en saillie sur le second des petits côtés verticaux 32 situés à l'extrémité de la cloison.

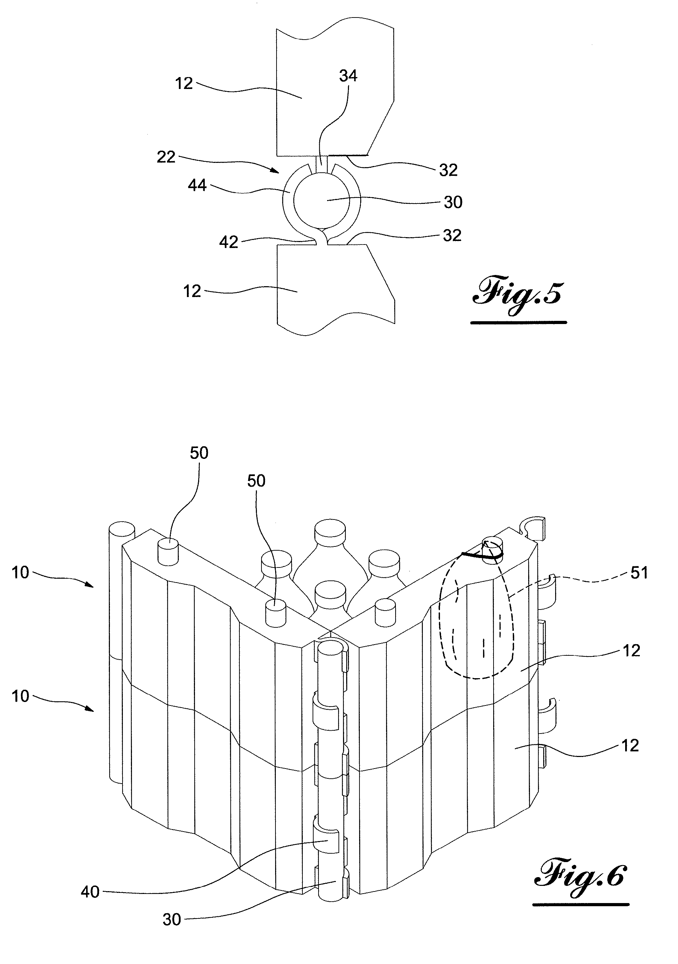

Chaque patte 40 comporte une racine 42 sensiblement perpendiculaire au second petit côté 32 du corps et une languette 44 arquée selon une courbure correspondant à celle de la tige cylindrique (figure 5). La face intérieure de chaque languette 44 délimite une cavité cylindrique inférieure à un demi-cercle. Les languettes 44 des deux pattes supérieure et inférieure sont parallèles alors que la languette 44 de la patte intermédiaire a sa concavité qui, en projection sur un plan horizontal, est opposée à celle des languettes des deux pattes supérieure et inférieure. Un passage vertical est présent entre les extrémités libres des languettes, ce passage étant d'une part moins large que le diamètre de la tige 30 et d'autre part supérieur à la largeur des branches 34. Les pattes 40 sont disposées sur le corps de manière à être en regard des espaces 36 présents entre la tige 30 et le corps.

En variante non représentée des pattes 40, la languette arquée sur moins d'un demi cercle est remplacée par une languette par exemple sur trois quarts de cercle, ouverte à l'opposé de la racine afin de ménager le passage moins large que le diamètre de la tige 30 et supérieur à la largeur des branches 34.

Le montage de deux cloisons s'effectue de la manière suivante : les cloisons 12 sont présentées décalées verticalement en ayant leurs plans médians coplanaires et en positionnant l'extrémité inférieure de la tige 30 de l'une des cloisons en regard de la patte supérieure 40 de l'autre cloison, l'une des cloisons étant par exemple debout verticalement dans le coffre 16. Ensuite, les cloisons 12 alignées sont coulissées mutuellement parallèlement à la direction de la tige 30 dont les branches 34 passent devant les extrémités libres des languettes 40, dans le passage vertical, jusqu'à ce que les faces supérieures et inférieures des corps des cloisons soient sensiblement au même niveau et que les languettes soient en regard des espaces 36 présents entre la tige et le corps.

Si les cloisons ne sont pas accrochées par leur paroi inférieure dans le tapis du coffre, elles peuvent être pivotées en utilisant la tige 30 comme axe de charnière, les languettes 40 tournant dans ce cas dans les espaces 32, enserrant suffisamment la tige 30 pour que les cloisons 12 soient maintenues dans leur direction longitudinale et maintenant les cloisons verrouillées en translation l'une par rapport à l'autre dans la direction de l'axe de la charnière.

Avantageusement, la juxtaposition des cloisons pour former un dispositif de compartimentage de coffre est très aisée à réaliser, le coulissement vertical d'une cloison par rapport l'autre en engageant la tige entre les pattes étant particulièrement facile.

De plus, ce coulissement vertical, c'est-à-dire parallèlement à la face de chacune des parois permettant de retenir une charge qui doit être retenue par les cloisons, permet avantageusement de disposer de moyens de fixation mutuel des cloisons qui d'une part sont solides pour éviter un démontage des cloisons quand une charge applique une force sur lesdites cloisons et qui d'autre part ne nécessitent pas un gros effort pour effectuer le jumelage desdites cloisons.

De manière générale, la tige et les pattes forment respectivement un élément mâle et des éléments femelles qui se fixent mutuellement par emboîtement en coulissant dans une direction différente de la direction dans laquelle la face de retenue de charge 23 des cloisons est susceptible d'être soumise à une force appliquée par la charge à retenir.

Avantageusement, quand le dispositif n'est pas utilisé, les cloisons alignées peuvent facilement être rangées le long d'un panneau latéral du coffre, par exemple à l'arrière du dossier de la banquette. Le démontage du dispositif pour stocker les cloisons indépendamment l'une de l'autre est également aisé. En effet, le coulissement vertical de démontage des cloisons ne nécessite pas un gros effort.

Avantageusement, le dispositif selon l'invention permet de maintenir des charges quel que soit l'emplacement de ces dernières dans le coffre à bagages, tout en ayant une forme qui s'adapte à celle desdites charges par pivotement des cloisons avant de la agripper sur le tapis de coffre.

Avantageusement, le dispositif selon l'invention peut comporter plus de deux cloisons pour maintenir des charges occupant une grande surface sur le tapis de coffre.

Avantageusement, le dispositif selon l'invention est économique à fabriquer puisque les cloisons peuvent être des pièces moulées, les deux cloisons formant le dispositif étant identiques et pouvant résulter d'un même moule.

Dans le mode de réalisation représenté à la figure 6, la paroi supérieure de chaque cloison 12 est équipée de deux plots 50. La paroi inférieure de chaque cloison 12 est équipée de deux logements (non représentés) dans lesquels sont engagés les plots 50 pour verrouiller les cloisons 12 de deux dispositifs 10 superposés. Avantageusement, les pions 50 libres au sommet des cloisons peuvent servir à accrocher des lanières d'un sac 51 contenant des objets à retenir immobiles dans le coffre.

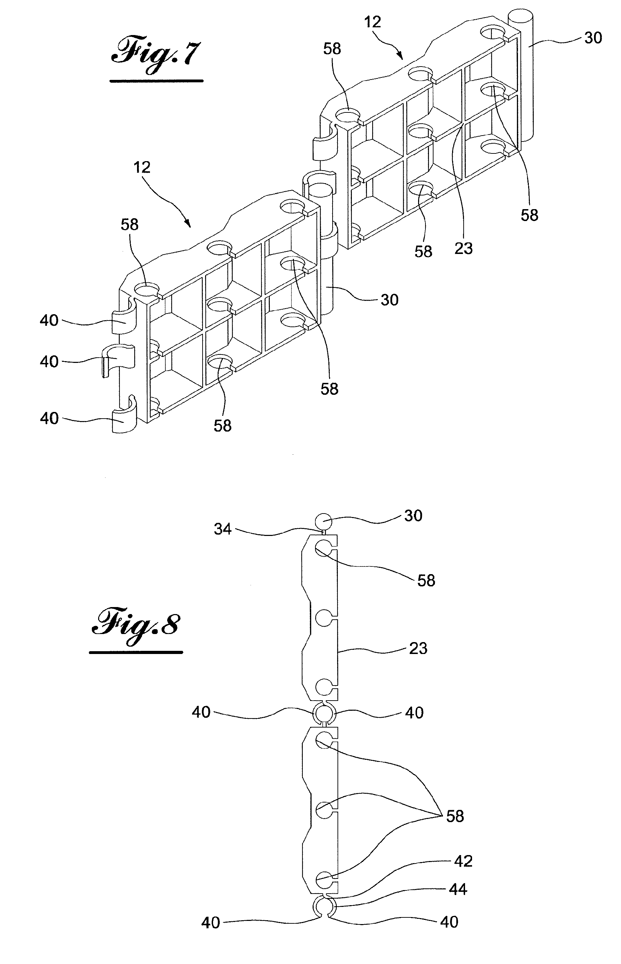

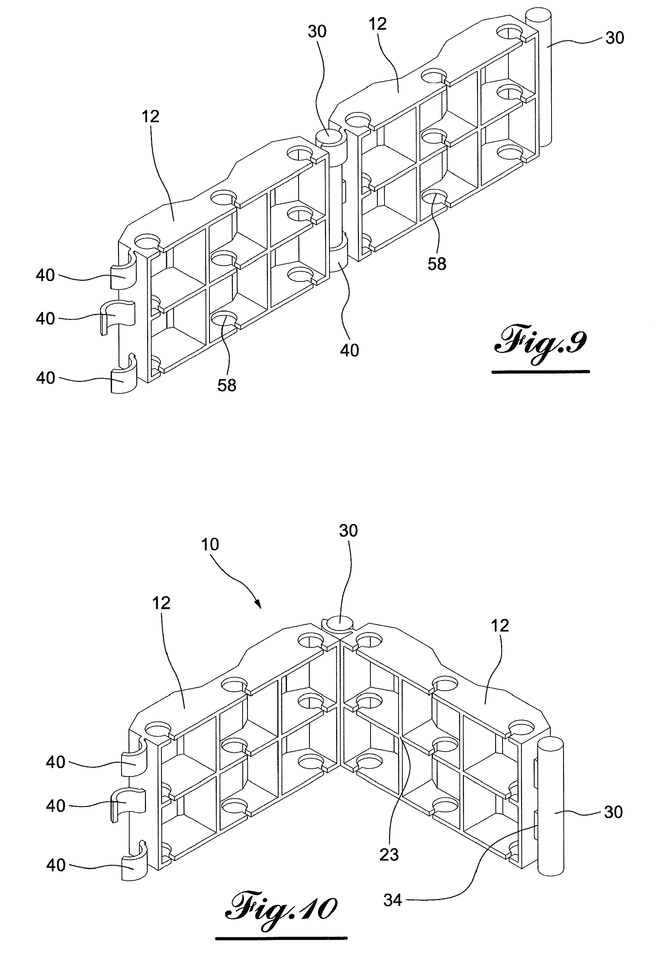

Dans le mode de réalisation du dispositif représenté aux figures 7 à 10, chaque cloison 12 est sous forme d'un caisson qui comporte un panneau principal 56 qui est de forme ondulée sur les figures, quatre panneaux verticaux dont deux constituent les petits côtés 32 situés à l'extrémité du corps et les deux autres sont répartis dans le caisson et trois panneaux horizontaux dont un constitue la paroi inférieure de la cloison, un autre constitue la paroi supérieure de la cloison et le dernier divise le caisson par son milieu.

Chacun des panneaux horizontaux comporte trois encoches 58 qui débouchent à l'opposé du panneau principal 56. A proximité des petits côtés 32 de la cloison 12 et au milieu de cette dernière, les encoches 58 des différents panneaux horizontaux sont disposées en rangées. Les encoches ont un profil en portion de cercle dont le diamètre est sensiblement égal au diamètre des tiges 30 afin de pouvoir recevoir ces dernières pour permettre le jumelage perpendiculaire de deux ou trois cloisons disposées rigidement par exemple en U ou en T.

Le jumelage de deux cloisons 12 pour constituer un dispositif de compartimentage s'effectue comme décrit précédemment en relation avec les figures 1 à 5, avec engagement vertical des cloisons quand elles sont alignées en assemblant la tige et les pattes des charnières qui, une fois l'engagement pour assemblage effectué, permettent le pivotement des cloisons.

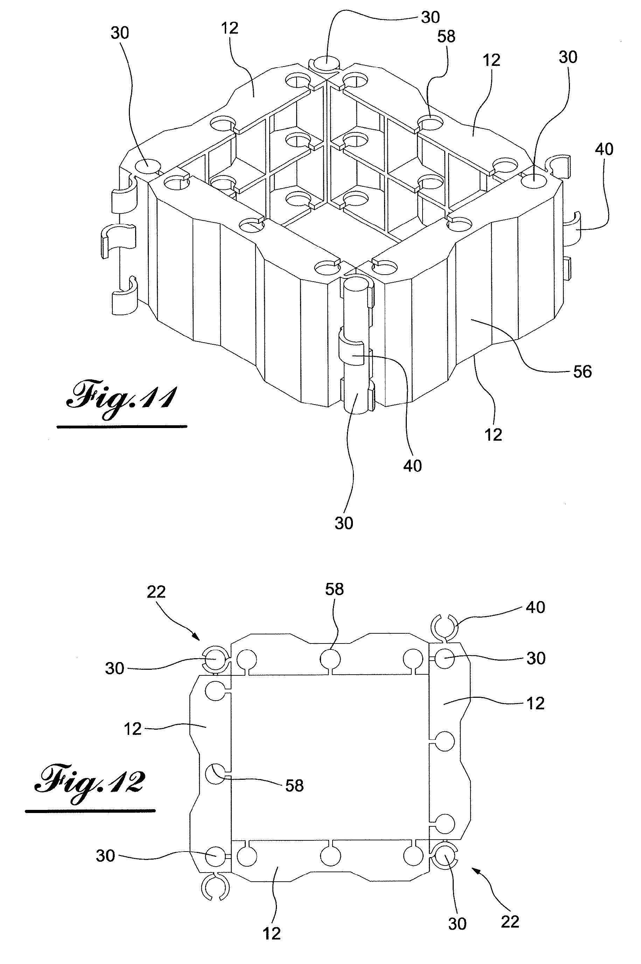

Comme représenté à la figure 12, ce mode de réalisation permet de former un bac de maintien d'objet en disposant quatre cloisons 12 en carré, ces cloisons 12 étant d'une part juxtaposées par les charnières 22 comme expliqué ci-dessus pour former un dispositif comportant deux cloisons 12, puis d'autre part juxtaposées par engagement vertical des deux dispositifs par coulissement vertical des tiges cylindriques 30 restantes dans les rangées verticales d'encoches 58 situées à l'opposé des charnières 22 de chacun des dispositifs.

L'avantage du mode de réalisation du dispositif selon l'invention représenté aux figures 7 à 12, en plus des avantages du mode de réalisation représenté aux figures 1 à 6, est qu'il permet soit de disposer de cloisons assemblées à angle droit, par exemple en L, en T ou en U, en utilisant les tiges 30 et les encoches 58, soit de disposer de cloisons assemblées avec un angle variable en utilisant la charnière entre les cloisons. Quand les cloisons sont assemblées à angle droit en utilisant la tige et les encoches, elles ne peuvent pas pivoter du fait de la butée des petits côtés latéraux 32 des cloisons contre la face des cloisons destinée à retenir une charge.

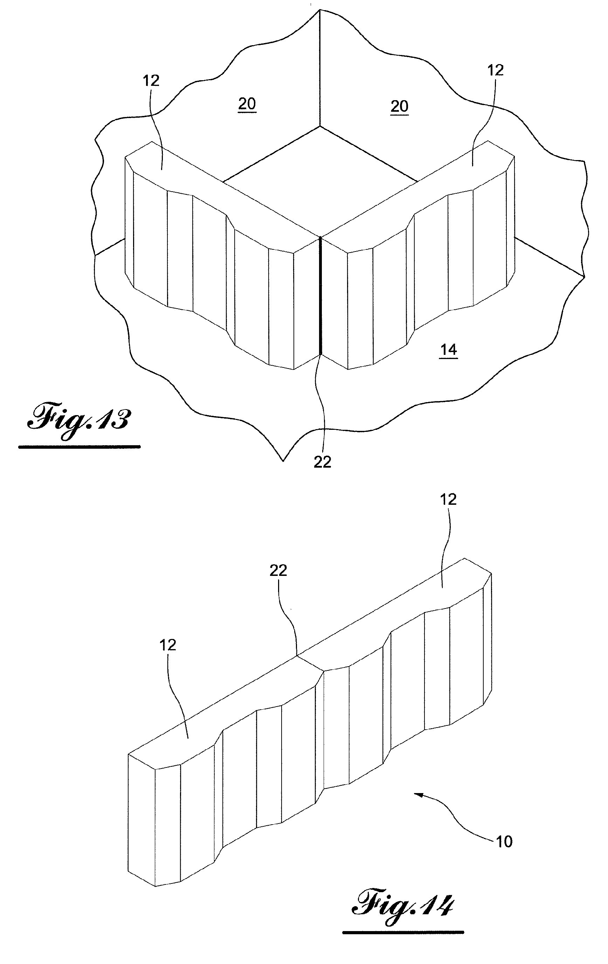

Dans le mode de réalisation du dispositif de compartimentage représenté aux figures 13 à 15, les cloisons 12 sont reliées entre elles par un film souple 22 formant charnière. Dans le cas où ce film formant charnière est d'un seul tenant avec les cloisons en étant venu de moulage avec lesdites cloisons, ces dernières ne sont pas démontables. La fabrication d'un tel dispositif nécessite, pour assurer une bonne souplesse et une bonne longévité de la charnière film venue de moulage, de faire pivoter plusieurs fois les cloisons après sortie du moule pendant le refroidissement de la charnière.

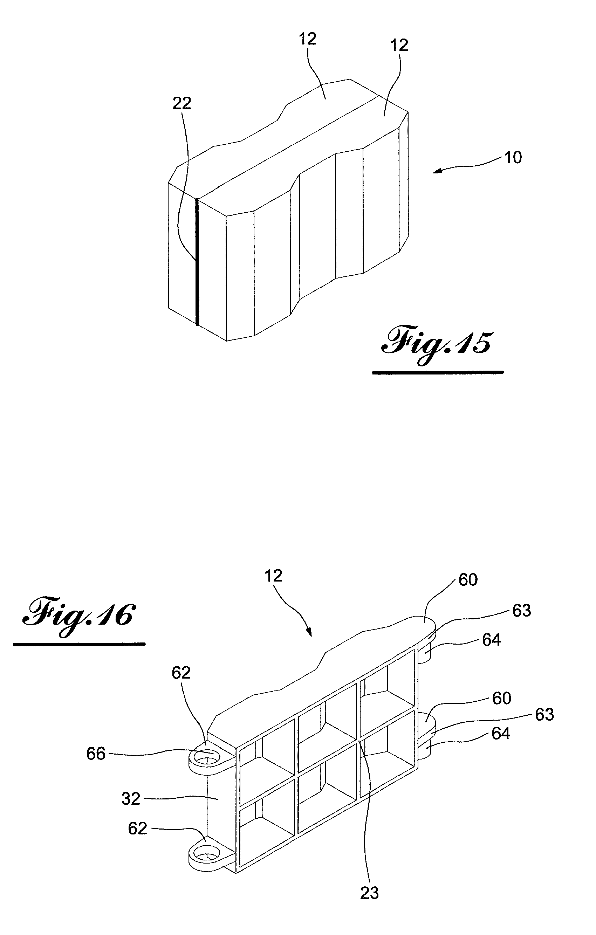

Le mode de réalisation représenté aux figures 13 à 15 présente pour avantage de permettre de replier les cloisons l'une contre l'autre pour les stocker dans le coffre (figure 15). De plus, son maniement est encore plus aisé que celui des modes de réalisation précédents.

En variante, la charnière formée d'un film souple peut être constituée par une bande de matière comportant un velours avec des boucles qui viennent se monter sur une bande de crochets aménagés à proximité d'un coin des cloisons, la charnière étant alors démontable.

Dans le mode de réalisation représenté à la figure 16, la charnière est constituée par des bras 60 en L et par des ailes horizontales 62 qui sont alésées à proximité de leur extrémité libre. Chaque bras en L est pourvu d'une lamelle horizontale 63 raccordée d'une part au petit côté 32 de la cloison 12 et d'autre part, vers le bas, à un ergot vertical de verrouillage 64 qui sert d'axe de charnière et dont l'extrémité inférieure est pourvue d'un moyen d'encliquetage (non représenté) conformé pour s'emboîter de façon démontable dans l'alésage 66 de l'aile 62 correspondante.

## Revendications

1. Dispositif de compartimentage de coffre à bagages, comportant deux cloisons (12) qui sont conformées pour être posées debout directement en appui sur une aire de chargement (14) d'un véhicule, qui comportent chacune une paroi inférieure dont la surface est munie de moyens leur permettant de tenir en place sur l'aire de chargement et qui sont jumelées entre elles, **caractérisé en ce que** les deux cloisons (12) sont jumelées entre elles par une charnière (22) permettant le pivotement mutuel des deux cloisons selon un axe vertical.

2. Dispositif selon la revendication 1, **caractérisé en ce que** la charnière (22) est un film de matière reliant des arêtes verticales adjacentes de chacune des deux cloisons (12).

3. Dispositif selon la revendication 2, **caractérisé en ce que** les deux cloisons (12) et le film de matière (22) sont d'un seul tenant.

4. Dispositif selon la revendication 1, **caractérisé en ce que** la charnière (22) comporte au moins un élément mâle (30) et un élément femelle (40) qui sont mutuellement emboîtés et qui peuvent être déboîtés pour séparer les cloisons (12).

5. Dispositif selon la revendication 4, **caractérisé en ce que** l'élément mâle (30) et l'élément femelle (40) sont respectivement sur un côté vertical (32) situé à chacune des extrémités de la cloison (12).

6. Dispositif selon l'une des revendications 4 ou 5, **caractérisé en ce que** l'élément mâle (30) et l'élément femelle (40) sont emboîtés par coulissement vertical selon l'axe de la charnière (22), peuvent être verrouillés en translation selon l'axe de la charnière et peuvent être déboîtés par coulissement vertical inverse.

7. Dispositif selon l'une des revendications 4 ou 5, **caractérisé en ce que** l'élément mâle (30) et l'élément femelle (40) sont respectivement au moins une tige verticale (30) reliée à l'une des cloisons (12) et au moins une patte d'accrochage (40) qui est reliée à l'autre des cloisons (12) et qui détermine une cavité interne ayant une forme complémentaire à au moins une partie de la tige (30) de manière que cette dernière soit emboîtée au moins partiellement dans la cavité pour constituer la charnière (22).

8. Dispositif selon la revendication 7, **caractérisé en ce que** la charnière (22) comporte deux pattes (40) qui sont arquées pour former la cavité, qui sont décalées verticalement et qui ont, en projection sur un plan horizontal, d'une part leur concavité se faisant face et d'autre part leurs extrémités libres distantes, et **en ce que** la tige verticale est cylindrique et est reliée à sa cloison par l'intermédiaire d'au moins une branche (34) qui décale la tige (30) par rapport à un corps de la cloison (12) afin qu'un espace (36) soit présent entre la tige et le corps, au dessus de la branche (34) et au dessous de la branche (34) de manière que les pattes d'accrochage (40) puissent pivoter dans l'espace (36) qui leur correspond.

9. Dispositif selon l'une quelconque des revendications précédentes, **caractérisé en ce que** les cloisons (12) comportent chacune des moyens leur permettant de tenir en place sur l'aire de chargement en étant immobilisées en rotation.

10. Dispositif selon l'une quelconque des revendications précédentes, **caractérisé en ce que** les cloisons (12) comportent chacune, en saillie de leur paroi supérieure, au moins un plot de verrouillage (50) et, en creux dans leur paroi inférieure, au moins un logement de forme correspondante à celle du plot en permettant la superposition de deux dispositifs (10) par emboîtement des plots (50) du dispositif inférieur (10) dans les logements du dispositif (10) supérieur.

11. Véhicule comportant une aire de chargement (14) dont une paroi sensiblement horizontale servant à supporter une charge (18) est recouverte d'un tapis de type velours pourvu de boucle, **caractérisé en ce qu'**il est équipé d'un dispositif (10) conforme à l'une quelconque des revendications précédentes dont une surface inférieure est revêtues de crochets permettant un accrochage dans les boucles du tapis quand ladite surface inférieure est posée sur le tapis pour faire tenir en place le dispositif (10) sur l'aire de chargement (14).
